# EUROPÄISCHE PATENTANMELDUNG

(11) **EP 1 498 306 A1**
(43) Veröffentlichungstag der Anmeldung: **19.01.2005**
(21) Anmeldenummer: 04011498.5
(22) Anmeldetag: 14.05.2004
(51) Int. Cl.: B60N 3/00

(54) **Spieltisch**

(30) Priorität: 07.07.2003 DE 10330769
(71) Anmelder: Schmidt & Lenhardt oHG, 74385 Pleidelsheim (DE)
(72) Erfinder: Schmidt, Peter, 88260 Argenbühl (DE)
(74) Vertreter: Vonnemann, Gerhard, Dr.-Ing

(57) **Zusammenfassung**

Die Erfindung betrifft einen Spieltisch (2) für Kinder in Automobilen, insbesondere für Kinder in Kindersitzen. Der Erfindung liegt daher die Aufgabe zugrunde, einen Spieltisch vorzuschlagen, der ohne und/oder mit den verschiedensten Arten von Kindersitzen verwendet werden kann. Die Aufgabe wird dadurch gelöst, dass der Spieltisch aus (2) einer, insbesondere horizontalen, Grundplatte (3) mit einer, vorzugsweise allseitigen, erhöhten Umrandung (4) besteht, wobei Abstützmittel (8, 9) zum Abstützen des Spieltisches (2) gegenüber der Rücklehne des Vordersitzes (10) bzw. gegenüber der Beifahrerfrontblende (11) vorgesehen sind.

## Beschreibung

Die Erfindung betrifft einen Spieltisch für Kinder in Automobilen, insbesondere für Kinder in Kindersitzen.

Es sind Kindersitze für die Verwendung in Automobilen bekannt, die eine horizontale Spielfläche für Kinder aufweisen. Nachteilig bei den bekannten Kindersitzen mit horizontaler Platte ist, dass das Spielzeug der Kinder leicht zu allen Seiten der Platte herunterfallen kann. Weiterhin nachteilig ist, dass die jeweiligen horizontalen Spielplatten nur zur Verwendung mit dem entsprechenden Kindersitz geeignet sind. Dies bedeutet, dass, falls ein größerer Kindersitz angeschafft werden muss, die entsprechende Platte nicht mehr verwendet werden kann.

Der Erfindung liegt daher die Aufgabe zugrunde, einen Spieltisch vorzuschlagen, der ohne und/oder mit den verschiedensten Arten von Kindersitzen verwendet werden kann.

Diese Aufgabe wird dadurch gelöst, dass der Spieltisch aus einer, insbesondere horizontalen, Grundplatte mit einer, vorzugsweise allseitigen, erhöhten Umrandung besteht, wobei Abstützmittel zum Abstützen des Spieltisches gegenüber der Rücklehne des Vordersitzes beziehungsweise gegenüber der Beifahrerfrontblende vorgesehen sind.

Die Umrandung verhindert, dass Gegenstände, insbesondere in Kurvenfahrten, von der horizontalen Grundplatte herunterfallen können.
Es ist besonders vorteilhaft, wenn die Umrandung die Grundplatte um mindestens fünf Zentimeter überragt. Ein besonders guter Schutz gegen Herunterfallen von Gegenständen wird dadurch erreicht, wenn die Grundplatte allseitig umrandet ist. Die Dicke der Grundplatte kann beliebig gewählt werden. Bei Materialien wie Schaumstoff wird man eine Dicke von etwa 3 cm bis 15 cm wählen.

Damit der Spieltisch, insbesondere bei Kurvenfahrten, nicht verrutschen kann, sind mit Vorteil Abstützmittel zum Abstützen des Spieltisches gegenüber der Rücklehne des Vordersitzes, beziehunsweise gegenüber der Beifahrerfrontblende vorgesehen, je nachdem, ob der Spieltisch auf der Rückbank, den Rücksitzen oder dem Beifahrersitz verwendet werden soll.

Um die Variabilität des Spieltisches zu erhöhen, ist mit Vorteil vorgesehen, dass die wirksame Länge der Abstützmittel variierbar ist. Unter wirksamer Länge der Abstützmittel wird hier die Strecke der Abstützmittel zischen Spieltisch bzw. Grundplatte und Rückenlehne beziehungsweise Beifahrerfrontblende verstanden. Anders ausgedrückt ist der Teil der Abstützmittel gemeint, der den Rand der Grundplatte überragt.

Gemäß einer vorteilhaften Ausgestaltung der Erfindung ist vorgesehen, dass als Abstützmittel mindestens ein, mit der Grundplatte oder der Umrandung verbundener, teleskopartig verstellbarer Stützarm vorgesehen ist. Dabei kann der Stützarm stufenlos verstellbar ausgebildet sein, oder es können bestimmte Rastpositionen vorgesehen sein. Aufgrund der teleskopartigen Verstellbarkeit ist eine leichte Anpassung der Abstützmittel an den gegebenen Abstand zwischen Tischhinterkante und Rückenlehne beziehungsweise Beifahrerfrontblende möglich.

Gemäß einer Weiterbildung der Erfindung ist vorgesehen, dass die Abstützmittel aus mindestens einem Stützarm bestehen, wobei Mittel, insbesondere Druckknöpfe oder ein Klettverschluss, zur lösbaren Befestigung des Stützarms an unterschiedlichen Positionen des Spieltisches, vorgesehen sind. Wenn der Stützarm beispielsweise aus festerem Schaumgummi gearbeitet ist, wird eine Verletzung des Kindes bei einem Auffahrunfall vermieden. Durch die erfindungsgemäße Ausgestaltung des Abstützmittels ist es jeder Person möglich, den Spieltisch für die Verwendung in unterschiedlichen Automobilen oder mit unterschiedlichen Sitzpositionen anzupassen. Die Stützarme, die beispielsweise mittels eines Klettverschlusses unterhalb der horizontalen Grundplatte angebracht sind und diese nach vorne überragen, können leicht gelöst werden und in anderer Position, also mit veränderter wirksamer Länge, beispielsweise durch Andrücken des Klettverschlusses, wieder befestigt werden. Die Änderung der wirksamen Länge kann innerhalb von Sekunden erfolgen.

Es ist von besonderem Vorteil, wenn zwei voneinander beabstandete Stützarme vorgesehen sind, wobei die Stützarme parallel zur Fahrzeuglängsrichtung, unterhalb der Grundplatte, insbesondere am linken und rechten Seitenrand der Grundplatte, angebracht sind. Diese spezielle Anordnung der Stützarme hat verschiedene Vorteile. Zum einen wird ein sicherer Halt des Spieltisches in Links- sowie in Rechtskurven gewährleistet. Durch die Anordnung der Stützarme wird die Bewegungsfreiheit der Kinderbeine gewährleistet, da das Unterteil der Kindersitze meist mittig unterhalb der Grundplatte angeordnet ist. Weiterhin bilden die beiden Stützarme einen rechten und linken, an das Unterteil des Kindersitzes grenzenden, Anschlag, der ein seitliches Verrutschen der horizontalen Grundplatte verhindert.

Um eine möglichst hohe Festigkeit, bei möglichst geringem Verletzungsrisiko, zu gewährleisten, ist mit Vorteil vorgesehen, dass die Grundplatte und/oder die Umrandung und/oder die Abstützmittel aus Kunststoff und/oder Schaumgummi und/oder Styropor gefertigt sind.

Um die Pflegeleichtigkeit des Spieltisches zu gewährleisten, ist mit Vorteil ein Feuchtigkeitsabweisender Überzug, insbesondere auf der horizontalen Grundplatte vorgesehen. Falls Kinder mit flüssiger Nahrung oder Getränken hantieren, kann eventuell verschüttete Nahrung beziehungsweise Getränke leicht abgewischt werden.

Um einen sicheren Halt von beispielsweise Trinkflaschen auf dem Spieltisch zu gewährleisten, ist mit Vorteil auf der Grundplatte, innerhalb der Umrandung, ein Haltering zur Aufnahme eines Behältnisses vorgesehen. Je nach Höhe des Halterings wird ein Umkippen und/oder Verrutschen des Behältnisses vermieden. Der Haltering kann beispielsweise aus Styropor, Kunststoff oder festen Schaumgummi hergestellt sein.

Gemäß einer vorteilhaften Ausgestaltung der Erfindung ist vorgesehen, dass auf der Grundplatte, innerhalb der Umrandung, mindestens ein lösbar befestigter, insbesondere mittels Druckknopf oder Klettverschluss lösbar befestigter, Behälter oder Haltering vorgesehen ist. Durch die Maßnahme wird gewährleistet, dass der Behälter oder der Haltering bei Bedarf entfernt werden können oder an den gewünschten Positionen befestigbar sind. Haltering und oder Behälter können an der Grundplatte und Oder seitlich an der Umrandung bestefigbar sein.

Es ist besonders zweckmäßig, dass mindestens ein Halteband zur Fixierung des Tisches am Kindersitz, an der Rückenlehne, oder an der Beifahrerfrontblende vorgesehen ist. Das Band verbindet beispielsweise die zwei Seitenflächen der Umrandung oder der horizontalen Grundplatte unter Bildung einer Schlaufe miteinander. Diese Schlaufe kann dann um die Kopfstütze des Beifahrers herumgelegt werden. Hierdurch wird ein seitliches Verrutschen des Tisches verhindert. Gleichzeitig sorgt die Befestigung in Verbindung mit den Abstützarmen dafür, dass der Spieltisch in seiner horizontalen Lage verbleibt. Von besonderem Vorteil ist, wenn zwei Bänder vorgesehen sind, wobei jeweils die beiden vorderen Bereich der seitlichen Umrandung und die beiden hinteren Bereiche der seitlichen Umrandung miteinander verbunden werden. Beide Bänder können dann beispielsweise um die Kopfstütze herumgelegt werden. Durch die Verwendung von zwei anstatt einem Band wird ein sicherer Halt des Spieltisches gewährleistet.

Der Komfort für das Kind wird wesentlich erhöht, wenn die Grundplatte an einer Seite im wesentlichen konvex gebogen ist. Mit Vorteil ist die dem Kind zugewandte Seite konvex gebogen. Hierdurch wird gewährleistet, dass das Kind alle Bereiche der Grundplatte erreichen kann. Weiterhin werden eventuelle Stöße der Grundplatte gegen das Kind, aufgrund der gebogenen Form, abgemildert.

Gemäß einer vorteilhaften Ausgestaltung der Erfindung ist vorgesehen, dass an den Abstützarmen Mittel zur zusätzlichen Befestigung an der Rückenlehne oder an der Beifahrerfrontblende vorgesehen sind. Durch die zusätzliche Fixierung mittels beispielsweise einem Klettverschluss wird ein Verrutschen des Spieltisches vermieden.

Gemäß einer vorteilhaften Weiterbildung ist vorgesehen, dass die Abstützarme auf der Seite des Kindes abgerundete Ecken und/oder Kanten aufweisen. Insbesondere die hintere untere Kante sollte gerundet ausgebildet sein um einen größtmöglichen Komfort für das Kind zu gewährleisten.

Anhand der Zeichnung, die ein Ausführungsbeispiel der Erfindung zeigt, wird die Erfindung zeigt, im Detail beschrieben.
Fig. 1 zeigt eine Anordnung des Spieltisches in einem Automobil, und
Fig. 2 zeigt eine Explosionsdarstellung des Spieltisches.

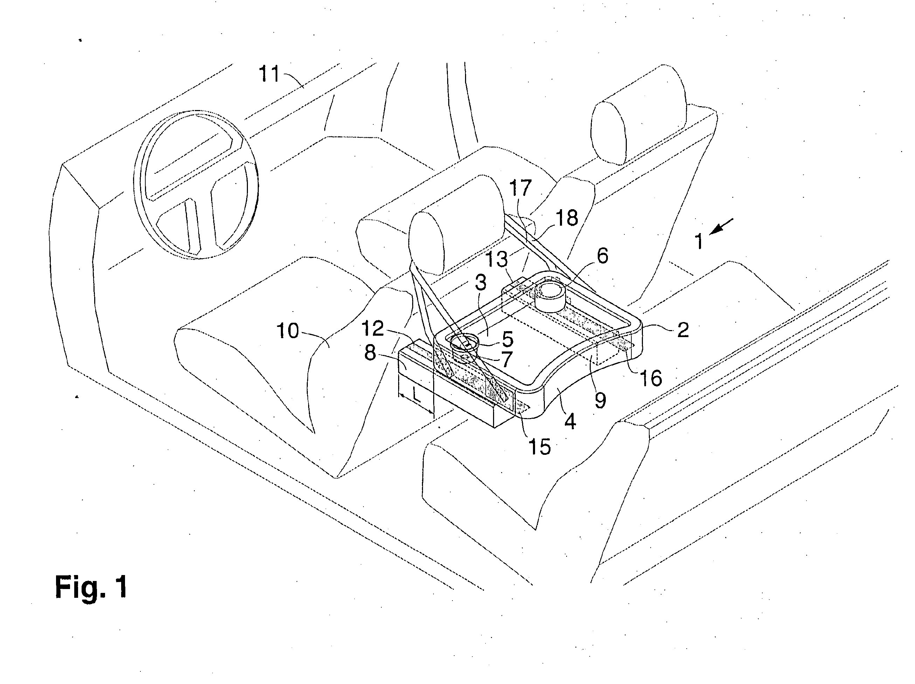

In Fig. 1 ist der Innenraum 1 eines Automobils gezeigt. Im hinteren Bereich des Innenraums 1 ist ein Spieltisch 2 angeordnet. Der Spieltisch 2 besteht aus einer horizontalen Grundplatte 3 mit einer allseitigen, erhöhten Umrandung 4. Innerhalb der Umrandung 4 auf der horizontalen Grundplatte 3 ist ein lösbar befestigter Behälter 5, sowie ein lösbar befestigter Haltering 6 vorgesehen. Als Befestigung dient in diesem Ausführungsbeispiel ein Klettverschluss 7. In den Haltering 6 können nicht dargestellte Trinkbehältnisse aufgenommen werden, sodass ein Umfallen verhindert wird. Selbstverständlich können die Bauteile 5,6 auch unlösbar mit der Grundplatte verbunden sein.

Der Spieltisch 2 weist Abstützmittel 8, 9 zum Abstützen des Spieltisches 2 gegenüber der Rückenlehne 10 des Vordersitzes beziehungsweise gegenüber der Beifahrerfrontblende 11 auf.

Als Abstützmittel 8, 9 sind zwei Stützarme vorgesehen. Die Stützarme weisen an ihrer Oberfläche einen streifenförmigen Teil eines Klettverschlusses 13, 14 auf. Die streifenförmigen Gegenstücke 15, 16 der Klettverschlussteile 13, 14 sind auf der Unterseite der horizontalen Grundplatte, parallel zur Fahrzeuglängsrichtung, angebracht. Zur Anpassung an verschiedene Automobile, beziehungsweise verschiedene Sitzpositionen, kann die wirksame Länge L der Stützarme 8, 9 variiert werden. Diese wird mit Vorteil so gewählt, dass eine möglichst horizontale Lage der Grundplatte 3 resultiert.

Es ist leicht zu erkennen, dass die dem nicht dargestellten Kind zugewandte Seite der Grundplatte, sowie die Umrandung konvex gebogen ist.

Zur Fixierung des Tisches 2 sind zwei Haltebänder 17, 18 vorgesehen.
Die Haltebänder 17, 18 sind längenverstellbar, um an die unterschiedlichen Gegebenheiten in verschiedenen Automobilen angepasst zu werden. Das Halteband 17 verbindet die vorderen Bereiche der seitlichen Umrandung mittels einer Schlaufe miteinander. Halteband 18 verbindet die hinteren Bereiche der seitlichen Umrandungen miteinander. Beide Haltebänder 17, 18 sind in Form einer Schlaufe um die Kopfstütze des Vordersitzes herumgelegt und sorgen so in Kombination mit den Abstützmitteln 8, 9 für einen sicheren Seitenhalt des Spieltisches.

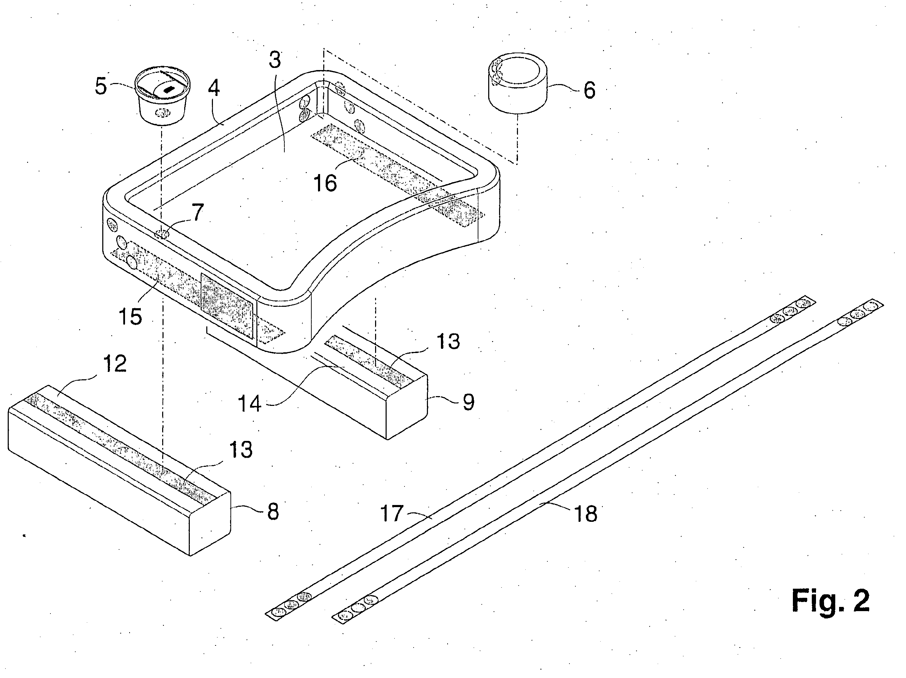

In Figur 2 ist eine Explosionsdarstellung des Spieltisches 2 dargestellt. Zu erkennen ist die horizontale Grundplatte 3 mit der allseitigen Umrandung 4. Die Grundplatte 3 und die Umrandung 4 sind an der vorderen Position konvex gebogen.

Als Abstützmittel 8, 9 sind zwei Stützarme aus Schaumgummi vorgesehen, die auf ihren Oberflächen 12 mit einem streifenförmigen Teil eines Klettverschlusses 13, 14 versehen sind. Anstelle der Klettverschlüsse können beispielsweise Druckknöpfe vorgesehen sein. Die Gegenstücke 15, 16 der Klettverschlüsse 13, 14 sind parallel zu den Seitenrändern der horizontalen Grundplatte 3, unterhalb dieser, angebracht. Dazwischen ist Raum für die Beine des Kindes. Die Abstützarme 8, 9 können mit Hilfe der Klettverschlüsse an verschiedenen Positionen unterhalb der Grundplatte befestigt werden. Selbstverständlich ist auch eine Befestigung auf oder seitlich an der Umrandung denkbar.

Deutlich zu erkennen ist auch der Haltering 6 zur Halterung einer Trinkflasche, sowie der Behälter 5, der mittels eines Klettverschlusses 7 auf der Grundplatte 3 befestigbar ist. Zur Fixierung der horizontalen Grundplatte sind zwei Haltebänder 17, 18 vorgesehen, die mit der Umrandung an verschiedenen Positionen verschraubt werden können. Die Haltebänder können beispielsweise um die Kopfstütze der Vordersitze gelegt werden.

Die Haltebänder können beispielsweise mittels Schrauben, Druckknöpfen, Klettverschlüssen, etc. mit der horizontalen Grundplatte 3 oder der Umrandung 4 verbunden werden. Besondere Festigkeit der Verbindung wird durch die Verwendung von Kunststoffschrauben und entsprechenden Gewinden in der Umrandung 4 erreicht.

### BEZUGSZEICHENLISTE

- 1: Innenraum
- 2: Spieltisch
- 3: Horizontale Grundplatte
- 4: Umrandung
- 5: Behälter
- 6: Haltering
- 7: Klettverschluss
- 8, 9: Abstützmittel
- 10: Rückenlehne
- 11: Beifahrerfrontblende
- 12: Oberfläche der Abstützarme
- 13, 14: Streifenförmiger Teil eines Klettverschlusses
- 15, 16: Gegenstücke der Klettverschlüsse
- 17, 18: Haltebänder

- L: Wirksame Länge der Abstützmittel

## Patentansprüche

1. Spieltisch für Kinder in Automobilen, insbesondere für Kinder in Kindersitzen, **dadurch gekennzeichnet, dass** der Spieltisch aus (2) einer, insbesondere horizontalen, Grundplatte (3) mit einer, vorzugsweise allseitigen, erhöhten Umrandung (4) besteht, wobei Abstützmittel (8, 9) zum Abstützen des Spieltisches (2) gegenüber der Rücklehne des Vordersitzes (10) bzw. gegenüber der Beifahrerfrontblende (11) vorgesehen sind.

2. Spieltisch nach Anspruch 1, **dadurch gekennzeichnet, dass** die wirksame Länge (L) der Abstützmittel (8, 9) variierbar ist.

3. Spieltisch nach Anspruch 2, **dadurch gekennzeichnet, dass** als Abstützmittel (8, 9) mindestens ein, mit der Grundplatte (3) oder der Umrandung (4) verbundener, teleskopartig verstellbarer, Stützarm vorgesehen ist.

4. Spieltisch nach Anspruch 2, **dadurch gekennzeichnet, dass** die Abstützmittel (8, 9) aus mindestens einem Stützarm bestehen, wobei Mittel (13, 14, 15, 16), insbesondere Druckknöpfe oder ein Klettverschluss, zur lösbaren Befestigung des Stützarms (8, 9) an unterschiedlichen Positionen des Spieltisches, vorgesehen sind.

5. Spieltisch nach einem der vorhergehenden Ansprüche, **dadurch gekennzeichnet, dass** zwei voneinander beabstandete Stützarme (8, 9) vorgesehen sind, wobei die Stützarme (8, 9) parallel zur Fahrzeuglängsrichtung, unterhalb der Grundplatte, (3) insbesondere am linken und rechten Seitenrand der Grundplatte (3), anbringbar sind.

6. Spieltisch nach einem der vorhergehenden Ansprüche, **dadurch gekennzeichnet, dass** die Grundplatte (3) und/oder die Umrandung (4) und/oder die Abstützmittel (8, 9) aus Kunststoff und/oder Schaumgummi und/oder Styropor gefertigt sind.

7. Spieltisch nach Anspruch 6, **dadurch gekennzeichnet, dass** ein feuchtigkeitabweisender Überzug vorgesehen ist.

8. Spieltisch nach einem der vorgehenden Ansprüche, **dadurch gekennzeichnet, dass** auf der Grundplatte, innerhalb der Umrandung mindestens ein Haltering (6) zur Aufnahme eines Behältnisses, insbesondere einer Drinkflasche, vorgesehen ist.

9. Spieltisch nach einem der vorgehenden Ansprüche, **dadurch gekennzeichnet, dass** auf der Grundplatte, innerhalb der Umrandung mindestens ein lösbar befestigter, insbesondere mittels Druckknopf oder Klettverschluss lösbar befestigter, Behälter (5) vorgesehen ist.

10. Spieltisch nach einem der vorhergehenden Ansprüche, **dadurch gekennzeichnet, dass** mindestens ein Halteband (17, 18) zur Fixierung des Tisches (2) am Kindersitz, an der Rückenlehne oder an der Beifahrerfrontblende, vorgesehen ist.

11. Spieltisch nach einem der vorhergehenden Ansprüche, **dadurch gekennzeichnet, dass** die Grundplatte (3) an mindestens einer Seite im wesentlichen konvex gebogen ist.
